# EUROPEAN PATENT APPLICATION

(11) **EP 0 778 183 A1**
(43) Date of publication of application: **11.06.1997**
(21) Application number: 96119433.9
(22) Date of filing: 04.12.1996
(51) Int. Cl.: B60R 25/00, B60R 25/04, E05B 49/00

(54) **A device for supplying a remote-control unit**

(30) Priority: 06.12.1995 IT TO950973
(71) Applicant: MAGNETI MARELLI S.p.A., 20145 Milano (IT)
(72) Inventor: Dian, Giampaolo, 10020 San Sebastiano PO, (Torino) (IT); Salomone, Giuseppe, 10042 Nichelino, (Torino) (IT)
(74) Representative: Quinterno, Giuseppe

(57) **Abstract**

A remote-control unit (T) for an anti-theft system supplied remotely by inductive coupling between a supply antenna or coil (A) forming part of the anti-theft system (S) and a receiving antenna or coil (B) forming part of the remote-control unit (T) also comprises a storage element (ACC), such as a capacitor or a rechargeable battery, for supplying the remote-control unit (T) even in the absence of a remote supply.

## Description

The present invention relates in general to remote-control units for activating/de-activating anti-theft systems and, in particular, relates to remote-control units of the type which are supplied remotely by the anti-theft system.

Remote-control units for anti-theft systems which are supplied by the anti-theft system without any electrical contact between the remote-control unit and any part of the anti-theft system are known in the art. These remote-control units, which are often called transponders, are supplied by the anti-theft system by means of electromagnetic waves. For this purpose, both the anti-theft system and the remote-control unit have respective inductive antennae or coils. The coil of the anti-theft system is supplied with an alternating current so as to generate a variable electromagnetic field. When the coil of the remote-control unit is close to the coil of the anti-theft system, this electromagnetic field causes an alternating current to flow in the coil of the remote-control unit. The current flowing in the coil of the remote-control unit can thus be used to supply the circuits in the remote-control unit.

The amount of energy which can be transmitted by the coil of the anti-theft system to the coil of the remote-control unit is small, but modern electronic circuits currently used in remote-control units for anti-theft systems operate with extremely low powers so that the energy picked up by the coil of the remote-control unit is sufficient to supply it.

The circuits present inside a remote-control unit typically comprise a transmitter which can transmit an identification code to the anti-theft system, which is used to activate or de-activate the anti-theft system. The anti-theft system is thus activated or de-activated exclusively upon receipt of a specific identification code. Therefore only an authorized user in possession of a remote-control unit programmed with the correct identification code can activate and de-activate the anti-theft system.

This remote supply system, which is widely known in the art, thus has the considerable advantage of making it unnecessary to fit a battery for supplying electronic circuits of the remote-control unit. This prevents failure of the remote-control unit to operate due to insufficient battery charge. This not infrequent occurrence in fact causes considerable inconvenience to the authorized user.

However, this system also has some disadvantages. The remotely supplied remote-control unit of the prior art can in fact operate only when it is close to the supply coil of the anti-theft system. This may lead to inconvenience in the use of the remote-control unit which has to be kept in a particular position in order to be able to control the anti-theft system.

For example, in the case of a motor vehicle, the remote-control unit of the anti-theft system of the vehicle is typically incorporated in the head of the ignition key of the vehicle. This is typically the same key which is used to open and close the doors of the vehicle.

An ideal position for the supply coil of the anti-theft system is close to the ignition-switch block of the vehicle's internal combustion engine. In fact, in this position, the ignition key is in a known and predetermined position in the vicinity of which the supply coil of the anti-theft system can be fitted easily and cheaply. Moreover, in this position, the anti-theft system can check periodically that the identification code of the remote-control unit incorporated in the head of the ignition key is correct so as to allow the internal combustion engine to operate only with a remote-control unit programmed with the correct identification code.

This decidedly advantageous solution has a disadvantage, however. Currently, remote-control units for vehicle anti-theft systems are in fact very often used to lock and unlock the electric door locks of the vehicle. Naturally, the anti-theft system also permits this function only when the correct identification code is recognized. This function is very convenient and particularly appreciated by users.

However, if a remotely-supplied remote-control is used and the supply coil is disposed close to the ignition switch of the vehicle, this function can no longer be performed since the remote-control unit is not supplied outside the vehicle and cannot therefore transmit the identification code. A solution could consist of the positioning of the supply coil or of a second supply coil adjacent a door lock of the vehicle. However, this solution is expensive and difficult to implement since the metal structure of the vehicle door tends to screen the electromagnetic field produced by the supply coil.

The object of the present invention is to provide a supply device for a remote-control unit which solves the problems described above in a satisfactory manner.

According to the present invention, this object is achieved by means of a supply device for a remote-control unit having the characteristics indicated in the claims which follow the present description.

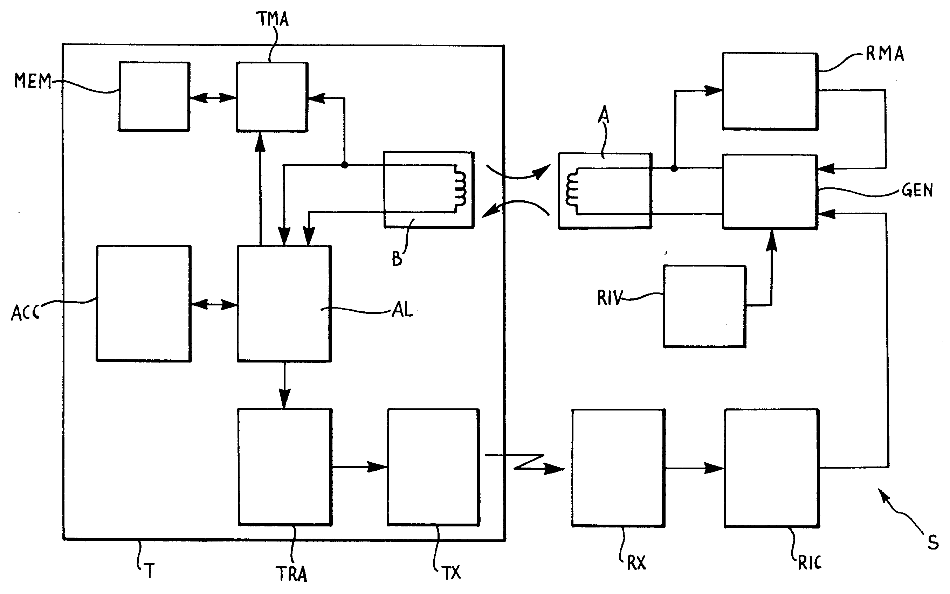

Further advantages and characteristics of the present invention will become clear from the following detailed description given with the aid of the appended drawings, provided purely by way of non-limiting example, in which Figure 1 is a block diagram showing an embodiment of an anti-theft system including a remote-control unit according to the present invention.

The present invention consists essentially of the use of a capacitor, or of a capacitor associated with a non-rechargeable or a rechargeable electrochemical storage battery, in order to store the energy necessary for one or more transmissions by means of the transmitter circuit of the remote-control unit.

For a better understanding, a possible embodiment of the present invention will now be described in greater detail with reference to Figure 1.

As can be seen, Figure 1 shows, by means of block diagrams, an anti-theft system S and its remote-control unit T. The anti-theft system S is fitted in a motor vehicle and the remote-control unit T is portable and, for example, is fitted in the head of the key of the motor vehicle. The anti-theft system S has an inductive coil or antenna A supplied by a generator circuit GEN. The generator circuit GEN supplies the coil A with a current alternating at a frequency suitable for the transmission of energy, for example, at the resonant frequency of the coil A. The remote-control unit T also has an inductive antenna or coil B possibly tuned to the resonance frequency of the coil A. When the coil B is brought close to or alongside the coil A, an inductive or possibly resonant coupling is thus created between the two coils A and B. An alternating current is thus induced in the coil B and energy is therefore transmitted from the coil A to the coil B.

The coil B is in turn connected to a supply circuit AL. This supply circuit AL controls and distributes the energy picked up by the coil B. Typically, the supply circuit AL comprises a rectifier for converting the alternating current output from the coil B into direct current suitable for supplying the electronic circuits of the remote-control unit T. The supply circuit AL may also possibly include a converter circuit for raising the voltage at the terminals of the coil B to enable the storage element ACC to be recharged.

As stated, the remote-control unit T comprises a storage element, indicated ACC. This storage element ACC is charged by the supply circuit AL by means of the energy provided by the coil B. The storage element ACC is thus brought to or kept in a charged state by means of the energy received by the coil B. As stated, the storage element ACC may be constituted by a capacitor, alone or possibly associated with a rechargeable or a non-rechargeable storage battery, or by a rechargeable storage battery.

The user of the remote-control unit T can thus use the remote-control unit T as if it were a conventional remote-control unit with a battery. That is, the remote-control unit T can be used even when it is not close to the coil A and is thus not supplied by the anti-theft system S by means of the energy stored in the storage element ACC. This takes place in conventional manner, for example, by means of a switch which activates a transmission circuit TRA which can transmit the identification code to the anti-theft system S. The transmission takes place by means of a transmitter element TX which may, for example, be an antenna for electromagnetic waves or a diode for emitting infra-red radiation. The anti-theft system S in turn has a corresponding receiver element RX which is connected in turn to a receiver circuit RIC. Naturally, the transmission circuit TRA and the transmitter element TX are supplied from the storage element ACC by means of the supply circuit AL. The remote-control unit T can thus be used even when it is not close to the supply coil A and hence as if it were a conventional remote-control unit with a battery. Unlike a conventional remote-control unit, however, the remote-control unit T according to the invention does not require the replacement (or recharging by conventional systems) of any battery disposed in the remote-control unit T during the course of its useful life.

Naturally, in order for the remote-control unit T to continue to operate, it has to be placed close to the coil A periodically to enable the storage element ACC to be recharged. As stated, this can take place when the ignition key, in the head of which, as stated, the remote-control unit T is fitted, is inserted into the switch block of the vehicle. When the key is in this position, recharging can take place easily.

In a currently-preferred embodiment, the anti-theft system S has a detector circuit RIV for determining if the remote-control unit T is close to the supply coil A. If the detector circuit RIV detects this situation, the generator circuit GEN is switched on, thus bringing about the transfer of energy to the remote-control unit T. The generator circuit GEN does not thus have to be kept permanently switched on with consequent expenditure of energy, but can be activated solely when required.

The remote-control unit T can also perform another function. For example, when it is beside the supply coil A, it can communicate data held within it, for example in a memory MEM, or its charge state, to the anti-theft system S. This transmission of data can take place by means of an amplitude-modulation circuit TMA which can modulate the inductive coupling between the two coils A and B. Naturally, in this case, the anti-theft system S has to have an amplitude-modulation receiver circuit RMA connected to the supply coil A. The transmitter circuit TRA may also possibly be used to perform this data transmission.

The remote-control unit T may be configured, for example, so as to perform the recharging cycle described below.

When the remote-control unit T is brought close to or inserted into a suitable seat, such as the ignition switch when the remote-control unit T is disposed in the head of the ignition key, the anti-theft system S, which can recognize this situation by means of the detector circuit RIV, in the specific case, by the rotation of the key to the "running" position, activates the generator circuit GEN which generates an alternating current which flows in the coil A.

The inductive coupling induces an alternating current in the coil B and energy supplied by the generator circuit GEN is thus transmitted from the coil A to the coil B. The supply circuit AL can thus both supply the circuits of the remote-control unit T and charge the storage element ACC.

The supply circuit AL detects the charge state of the storage element ACC by measuring the voltage at its terminals. When the supply circuit AL detects a satisfactory or fully-charged state it transmits this information to the anti-theft system S so that the transmission of energy by the generator circuit GEN can be stopped. This information can be transmitted by means of the amplitude-modulation circuit TMA or by means of the transmitter circuit TRA.

If the remote-control unit T also performs the function of a transponder by transmitting the data held in its internal memory MEM, and if this function has priority, the recharging cycle may be performed or completed once this function has been completed.

Naturally, the principle of the invention remaining the same, the details of construction and forms of embodiment may be varied widely with respect to those described and illustrated, without thereby departing from the scope of the present invention as defined in the appended claims.

## Claims

1. A remote-control unit (T) particularly for an anti-theft system (S) supplied remotely by the anti-theft system (S) by inductive, preferably resonant, coupling between a first antenna or coil (A) included in the anti-theft system (S) and supplied by a generator circuit (GEN) of the anti-theft system (S) and a second antenna or coil (B) included in the remote-control unit (T) for supplying at least one electronic circuit (TMA, TRA) included in the remote-control unit (T),
characterized in that the remote-control unit (T) also comprises an energy storage element (ACC) which is kept in a charged state by means of the energy received by the second antenna (B) and can supply the at least one electronic circuit (TMA, TRA) in the absence of inductive coupling between the first and second antennae (A, B).

2. A remote-control unit (T) according to Claim 1, characterized in that the storage element (ACC) comprises a capacitor.

3. A remote-control unit (T) according to Claim 1, characterized in that the storage element (ACC) comprises a rechargeable battery.

4. A remote-control unit (T) according to Claim 1, characterized in that the storage element (ACC) comprises a capacitor and a battery.

5. A remote-control unit (T) according to Claim 4, characterized in that the battery is rechargeable.

6. A remote-control unit (T) according to any one of Claims 1 to 5, characterized in that it comprises a supply circuit (AL) for recharging the storage element (ACC) by means of the energy received by the second antenna (B).

7. A remote-control unit (T) according to Claim 6, characterized in that the supply circuit (AL) is configured to detect the charge state of the storage element (ACC) and to transmit it to the anti-theft system (S), the anti-theft system (S) being configured to de-activate the generator circuit (GEN) when the storage element (ACC) is adequately charged.

8. A remote-control unit (T) according to any one of Claims 1 to 7, characterized in that the at least one electronic circuit (TMA, TRA) comprises an amplitude-modulator circuit (TMA) which can transmit data to the anti-theft system (S) by means of the inductive coupling between the first and second antennae (A, B).

9. A remote-control unit (T) according to any one of Claims 1 to 8, characterized in that the at least one electronic circuit (TMA, TRA) comprises a transmitter circuit (TRA) which can transmit data to the anti-theft system (S) in the absence of the inductive coupling.

10. A remote-control unit (T) according to any one of Claims 1 to 9, characterized in that it comprises a memory circuit (MEM) which can store data connected with the at least one electronic circuit (TMA, TRA).

11. A remote-control unit (T) according to any one of Claims 6 to 10, characterized in that the supply circuit (AL) comprises a voltage raising circuit.
